# EUROPÄISCHE PATENTSCHRIFT

(11) **EP 3 237 733 B1**
(45) Veröffentlichungstag und Bekanntmachung des Hinweises auf die Patenterteilung: **27.10.2021**
(21) Anmeldenummer: 15813327.2
(22) Anmeldetag: 14.12.2015
(51) Int. Cl.: F02B 29/04, F28F 9/02, F28F 9/007

(54) **LADELUFTKÜHLER-ANORDNUNG**
CHARGE AIR COOLER
REFROIDISSEUR D'AIR DE CHARGE

(30) Priorität: 22.12.2014 DE 102014226865
(43) Veröffentlichungstag der Anmeldung: 01.11.2017
(73) Patentinhaber: Mahle International GmbH, 70376 Stuttgart (DE)
(72) Erfinder: BANGERT, Boris, 71296 Heimsheim (DE); EILEMANN, Andreas, 71729 Erdmannhausen (DE); EMRICH, Karsten, 70599 Stuttgart (DE); ISERMEYER, Tobias, 74245 Löwenstein (DE); POMIN, Hubert, 71069 Sindelfingen (DE); RÖSCHMANN, Timm, 71154 Nufringen (DE); STEHLIG, Jürgen, 72654 Neckartenzlingen (DE)
(74) Vertreter: BRP Renaud & Partner mbB Rechtsanwälte Patentanwälte Steuerberater
(86) Internationale Anmeldenummer: PCT/EP2015/079648
(87) Internationale Veröffentlichungsnummer: WO 2016/102230

(56) Entgegenhaltungen:
- EP-A1- 2 886 823
- WO-A1-2006/088411
- WO-A1-2007/031274
- DE-A1-102012 206 121
- US-A1- 2003 159 815

## Beschreibung

Die vorliegende Erfindung betrifft eine Ladeluftkühler-Anordnung mit einem durchströmbaren Gehäuse sowie einem darin angeordneten Kühlen von Ladeluft.

Zum Betreiben von Brennkraftmaschinen, ist die Zufuhr von Luft in Brennräumen der Brennkraftmaschine notwendig. Die Luft wird häufig von dem Einbringen in die Brennräume verdichtet und liegt als Ladeluft vor. Hierdurch ist eine erhöhte Dichte der Luft und somit eine erhöhte Effizienz der Brennvorgänge in der Brennkraftmaschine realisierbar. Durch die Verdichtung der Luft, die mit Hilfe eines Turboladers erfolgen kann, geht nach bekannten thermodynamischen Gesetzmäßigkeiten eine Steigerung der Luft einher, die der Effizienz der Brennkraftmaschine kontraproduktiv gegenübersteht. Zur zumindest teilweisen Neutralisation dieses nachteiligen Effekts, kann eine an die Verdichtung der Luft anschließende Kühlung der Ladeluft durchgeführt werden. Eine solche Kühlung kann beispielsweise mit Hilfe eines Kühlers bzw. Ladeluftkühlers erfolgen, die in einem Gehäuse einer Ladeluftkühler-Anordnung angeordnet und mit dem Kühler verbunden ist. Der Kühler kann zur Kühlung der Ladeluft von einem Kühlmittel durchströmt sein, wobei die Strömungen des Kühlmittels und der Ladeluft fluidisch voneinander getrennt sind. Somit führt der Kontakt des im Vergleich zur Ladeluft kühleren Kühlers zu einer Kühlung der Ladeluft und dementsprechend zu einer Erwärmung des Kühlers.

Eine solche Ladeluftkühler-Anordnung ist aus der DE 10 2012 206 121 A1 bekannt. Diese Anordnung weist ein durchströmbares Gehäuse auf, in dem ein Kühler mit einer Rohrstruktur angeordnet ist. Die Rohrstruktur ist von Abschlussteilen umgeben. Zwischen der Rohrstruktur und einem der Abschlussteile ist ein Dichtmittel zum Abdichten des Kühlers vorgesehen.

Die WO 2006/088411 A1 offenbart eine Ladeluftkühler-Anordnung mit einem Gehäuse und einem darin angeordneten Kühler. Zudem sind vier Abschlussteile vorgesehen, wobei drei der Abschlussteile mechanisch mit dem Gehäuse verbunden und der andere Abschlussteil vom Gehäuse beabstandet ist.

Die Strömung der Ladeluft bzw. die Luftströmung entlang des Kühlers führt dabei zu einem Temperaturunterschied innerhalb des Kühlers, insbesondere in Strömungsrichtung der Ladeluft. Dieser Temperaturunterschied innerhalb des Kühlers kann zu einer Deformation des mit dem Gehäuse verbundenen Kühlers führen, die zu einer Beschädigung des Kühlers und/oder des Gehäuses führen kann. Die Deformation kann insbesondere Lecks am Gehäuse bzw. am Kühler verursachen, die ein Austreten von Ladeluft bzw. von Kühlmittel zur Folge hätten.

Die vorliegende Erfindung beschäftigt sich mit dem Problem, für eine Ladeluft-Kühleranordnung der eingangs genannten Art eine verbesserte oder zumindest andere Ausführungsform anzugeben, die sich insbesondere durch eine höhere Belastbarkeit und/oder eine verlängerte Lebensdauer auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf den allgemeinen Gedanken, einen Kühler einer Ladeluftkühler-Anordnung mit Hilfe eines Abschlussteils des Kühlers mit einem durchströmbaren Gehäuse der Anordnung mechanisch zu verbinden und diese Verbindung flexibel auszugestalten. Das Abschlussteil ist beweglich bezüglich des Gehäuses am Gehäuse angebracht. Hierdurch ist auch der Kühler, wenigstens im Bereich des Abschlussteils, beweglich bezüglich des Gehäuses. Somit können beispielsweise thermodynamische Ausdehnungen bzw. Kontraktionen des Kühlers und/oder des Gehäuses ausgeglichen werden. Insbesondere können hierdurch Deformationen des Kühlers, die infolge von Temperaturunterschieden innerhalb des Kühlers auftreten, ausgeglichen werden. Dies hat zur Folge, dass die Lebensdauer der Anordnung, insbesondere des Kühlers, verlängert wird, weil eine durch die thermodynamischen Ausdehnungen und Kontraktionen bedingte Beschädigung der Anordnung vermieden oder zumindest reduziert werden. Zudem kann die Anordnung hierdurch höheren Belastungen ausgesetzt werden so dass eine erhöhte Effizienz der Anordnung, insbesondere der Kühlleistung des Kühlers, realisierbar sind. Thermodynamischen Ausdehnungen und/oder Kontraktionen sowie die damit verbundenen Deformationen erfolgen insbesondere infolge von Temperaturschwankungen bzw. Temperaturunterschieden innerhalb des Kühlers und/oder des Gehäuses auf. Der Kühler dient der Kühlung von, beispielsweise einer Brennkraftmaschine zuzuführenden, Luft, wobei die Luft zuvor verdichtet bzw. geladen sein und somit als Ladeluft vorliegen kann. Nachfolgend wird einheitlich der Ausdruck Ladeluft verwendet, wobei klar ist, dass die Anordnung auch zur Kühlung von unverdichtetem Luft zum Einsatz kommen kann. Zur Kühlung der Ladeluft strömt ein Kühlmittel, insbesondere Wasser, durch eine Rohrstruktur des Kühlers. Der Kühler ist ferner von Ladeluft durchströmbare, wobei die Strömungen des Kühlmittels innerhalb der Rohrstruktur und des Ladeluft durch den Kühler fluidisch getrennt sind. In der Folge wird die Ladeluft beim Durchströmen des Kühlers mittelbar oder unmittelbar durch die Rohrstruktur gekühlt. Hierzu weist das Kühlmittel vorteilhaft eine niedrigere Temperatur auf als die Ladeluft. Die Rohrstruktur wird von zwei solchen Abschlussteilen, nämlich einem ersten Abschlussteil und einem zweiten Abschlussteil, seitlich begrenzt. Die Abschlussteile sind vorteilhaft mechanisch mit der Rohrstruktur verbunden und gegenüberstehend angeordnet. Es kann vorgesehen sein, dass die Rohrstruktur hierdurch von den Abschlussteilen zusammengehalten wird. Das heißt insbesondere, dass die Abschlussteile ein Auseinanderfallen der Rohrstruktur verhindern. Erfindungsgemäß ist vorgesehen, dass der Kühler über zumindest ein solches Abschlussteil, vorzugsweise über beide Abschlussteile, mit dem Gehäuse verbunden ist. Dabei sind alle anderen Abschlussteile, also wenigstens eines der Abschlussteile bezüglich des Gehäuses beweglich an diesem angebracht. Die Beweglichkeit des Anschlussteils relativ zum Gehäuse ist somit in zumindest einer Bewegungsrichtung in einem Beweglichkeitsbereich gegeben, die insbesondere durch das Anstoßen des Kühlers am Gehäuse begrenzt ist. Innerhalb des jeweiligen Bewegungsbereichs in der zugehörigen Bewegungsrichtung kann sich der Kühler also relativ zum Gehäuse bewegen, wodurch der erfindungsgemäße Raum für die durch die Temperaturunterschiede verursachten Kontraktionen bzw. Ausdehnungen geschaffen oder diesen entgegengewirkt wird.

Die zu kühlende Ladeluft strömt entlang der Rohrstruktur. Hierbei kühlt sich die Ladeluft ab. Dadurch entstehen in der Rohrstruktur Temperaturunterschiede, die zu eine entsprechenden Deformation der Rohrstruktur und des Kühlers führen können. Diese Deformation kann beispielsweise in Form einer Verbiegung der Rohrstruktur vorliegen. Dabei führen Ausdehnungen in wärmeren Bereichen des Kühlers, insbesondere der Rohrstruktur, und/oder Kontraktionen in kühleren Bereich des Kühlers, insbesondere der Rohrstruktur, zu einer Verbiegung des Kühlers bzw. der Rohrstruktur. Die wärmeren Bereiche des Kühlers sind dabei häufig diejenigen des Kühlers, die der Strömung der Ladeluft zugewandt sind, während die kälteren Bereiche die von der Luftströmung abgewandten sind. Diese Deformationen werden mit Hilfe der erfindungsgemäßen Lösung ausgeglichen. Nachfolgend wird der Ausdruck "Deformation" für jegliche Art von Ausdehnungen und Kontraktionen sowie deren Kombinationen und insbesondere der Verbiegung verwendet.

Die Rohrstruktur kann einen oder mehrere Strömungspfade für das Kühlmittel aufweisen, die von einem oder mehreren Rohren gebildet werden können. Die Rohre verlaufen vorteilhaft zwischen den Abschlussteilen und sind mechanisch mit diesen verbunden. Zur verbesserten Kühlung ist es vorteilhaft, besage Rohre dünn auszugestalten. Insbesondere können hierzu Flachrohre zum Einsatz kommen. Dabei ermöglicht es die erfindungsgemäße Lösung, flachere bzw. dünnere Rohre einzusetzen, um durch einen verbesserten Temperaturausgleich zwischen Ladeluft und Rohrstruktur die Effizient der Anordnung zu steigern.

Die Anordnung kann prinzipiell mehrere fluidische Ausgänge haben, um beispielsweise mehre Brennräume der zugehörigen Brennkraftmaschine mit Ladeluft zu versorgen. Hierzu kommt üblicherweise ein Verteiler zum Einsatz. Dabei kann das Gehäuse als ein Verteilergehäuse ausgestaltet sein oder einen solchen Verteiler aufweisen. In diesen Fällen ist der Kühler bevorzugt innerhalb des Verteilers oder in einem beliebigen Abschnitt innerhalb des Gehäuses stromauf den Verteiler angeordnet. Selbstverständlich könnte der Kühler auch stromab des Verteilers angeordnet werden.

Zum Anordnen des Kühlers ins Gehäuse weist das Gehäuse eine Einschuböffnung auf, in die der Kühler bei der Montage und/oder zum Austausch des Kühlers in einer Einschubrichtung eingeschoben bzw. aus der der Kühler hinausgezogen wird. Die Einschuböffnung ist quer zur Strömungsrichtung der Ladeluft orientiert, so dass auch die Einschubrichtung quer zur Strömungsrichtung der Ladeluft verläuft. Die Abschlussteile sind in der Einschubrichtung gegenüberliegend oder quer zur Einschubrichtung, insbesondere senkrecht zur Einschubrichtung, gegenüberliegend angeordnet.

Der jeweilige Abschlussteil kann beliebig ausgestaltet sein. Insbesondere ist es vorstellbar, den jeweiligen Abschlussteil einstückig bzw. monolithisch auszubilden. Es ist aber auch vorstellbar, dass wenigstes einer der Abschlussteile mehrteilig ausgestaltet ist.

Erfindungsgemäß ist der Kühler, insbesondere die Rohrstruktur, über wenigstens einen solchen Abschlussteil gegen das Gehäuse vorgespannt. Die Vorspannung ist in bei der Kühlung der Ladeluft zu erwartenden Verbiegung des Kühlers, insbesondere der Rohrstruktur, entgegengesetzter Richtung orientiert. Das heißt, dass der Kühler, insbesondere die Rohrstruktur, negativ vorgespannt wird. In der Folge führt die durch die Kühlung erfolgte Deformation bzw. Verbiegung des Kühlers bzw. der Rohrstruktur zu einem Ausgleich der Vorspannung und somit zu einer Rückführung des Kühlers zu seiner ursprünglichen Form.

Wenigstens ein solcher Abschlussteil ist beabstandet zum Gehäuse bzw. einer Wandung des Gehäuses angeordnet. Dabei kann dieser Abschlussteil am Gehäuse angebracht sein. Die beabstandete Anordnung des Abschlussteils zum Gehäuse führt zu einer Bewegungsfreiheit des Abschlussteils bezüglich des Gehäuse oder zumindest einer dahingehenden Vereinfachung. Somit kann ein besserer Ausgleich der Deformationen des Kühlers bzw. der Rohrstruktur erfolgen.

Die Abschlussteile stabilisieren vorzugsweise den Kühler mechanisch. Hierzu ist es vorteilhaft, wenn wenigstens einer der Abschlussteile eine Wandung aufweist, die bevorzugt eben verläuft. Die Wandung führt zu einer Versteifung des Kühlers und somit zu einer entsprechenden mechanischen Stabilität und verläuft in Richtung der Luftströmung, insbesondere parallel dazu.

Das bewegliche Anbringen des Abschlussteils am Gehäuse kann unter Einsatz eines elastischen Elements erreicht sein. Das elastische Element ist bevorzugt zwischen dem Abschlussteil und dem Gehäuse angeordnet und derart ausgestaltet bzw. ausgebildet, dass es relative Bewegungen zwischen dem Abschlussteil und dem Gehäuse erlaubt. Das elastische Element ist bevorzugt aus einem Kunststoff hergestellt, der für die im Gehäuse herrschenden Bedingungen und Temperaturen geeignet ist.

Das Anordnen des elastischen Elements zwischen dem Gehäuse und dem Abschlussteil kann auf beliebige Weise realisiert sein, sofern hierdurch die relative Bewegung zwischen dem Gehäuse und dem Abschlussteil im gewünschten Bereich möglich ist. Hierzu ist es vorstellbar, das Gehäuse innenseitig mit einer Nut zu versehen, in die das elastische Element wenigstens bereichsweise angeordnet ist.

Dabei kann das elastisch Element beliebige Formen und/oder Größen aufweisen und beliebig verlaufe. Das elastische Element erstreckt sich bei bevorzugten Varianten in einer Umfangsrichtung des Kühlers entlang des zugehörigen Abschlussteils. Dies führt zu einer möglichst gleichmäßigen Beweglichkeit des Abschlussteils relativ zum Gehäuse.

Bei in Einschubrichtung gegenüberliegenden Abschlussteilen ist es vorteilhaft, wenn der erste Abschlussteil einen Abschlussflansch aufweist, der mit einem zugehörigen Gehäuseflansch des Gehäuses zusammenwirkt, um den Abschlussteil und das Gehäuse miteinander zu verbinden. Dabei ist es bevorzugt, wenn der im Bereich der Einschuböffnung angeordnete Abschlussteil den Abschlussflansch aufweist, um eine Montage des Kühlers im Gehäuse zu vereinfachen. Dementsprechend weist das Gehäuse bevorzugt an der Einschuböffnung den Gehäuseflansch auf, der die Einschuböffnung aufweisen oder einfassen kann.

Bevorzugt sind Ausführungsformen, bei denen wenigstens einer der Abschlussteile einen abstehenden Rand aufweist, über den der Abschlussteil mit dem Gehäuse verbunden ist. Der jeweilige Rand steht dabei in Erstreckungsrichtung des Abschlussteils oder quer, insbesondere senkrecht, dazu, vom Abschlussteil ab. Dies führt zu einer erhöhten Stabilität des Kühlers und/oder zu einer verbesserten Beweglichkeit des Abschlussteils bezüglich des Gehäuses.

Der Rand ist vorteilhaft in einem zugehörigen, innenseitigen Schlitz des Gehäuses angeordnet und mit dem Gehäuse verbunden. Alternativ kann der Rand auf einer innenseitigen Ablage des Gehäuses angeordnet und dort mit dem Gehäuse verbunden sein. Dadurch kann insbesondere eine formschlüssige Verbindung des Rands mit dem Gehäuse zustande kommen, die eine Bewegung des Rands entlang des zugehörigen Schlitzes oder quer dazu und somit eine relative Bewegung des Kühlers relativ zum Gehäuse zulässt.

Auch ist es vorstellbar, den Rand zusätzlich oder alternativ auf beliebige andere Weise mit dem Gehäuse zu verbinden. Hierzu kann der Rand mit dem Gehäuse verlötet und/oder verschweißt und/oder verklebt und dergleichen sein.

Vorstellbar ist es auch, zumindest einen Abschlussteil mit dem Gehäuse derart zu verlöten und/oder verschweißen und/oder verkleben, dass eine relative Bewegung des Abschlussteils zum Gehäuse gewährleistet ist.

Der Kühler weist zusätzlich zum ersten Abschlussteil und dem zweiten Abschlussteil einen dritten Abschlussteil und einem dem dritten Abschlussteil gegenüberliegenden vierten Abschlussteil auf. Der dritte und der vierte Abschlussteil dienen insbesondere der Erhöhung der Stabilität des Kühlers. Der dritte und der vierte Abschlussteil verlaufen dabei quer, insbesondere senkrecht, zum ersten und zweiten Abschlussteil und begrenzen die Rohrstruktur an den zugehörigen Seiten. Somit ist der Kühler, eine quaderartige Grundform vorausgesetzt, an zwei gegenüberliegenden Seiten durchströmbar und an der anderen Seite durch die Abschlussteile begrenzt. Der Kühler ist in diesem Fall zweckhaft derart im Gehäuse angeordnet, dass die Abschlussteile in Richtung der Luftströmung, insbesondere parallel dazu, verlaufen, so dass eine möglichst widerstandsfrei Strömung der Ladeluft durch den Kühler erreicht Somit liegen sich also insbesondere zwei der Abschlussteil bezüglich der Einschubrichtung gegenüberliegend und die anderen zwei quer zur Einschubrichtung gegenüberliegend.

Bei bevorzugten Ausgestaltungen sind zwei der sich gegenüberliegenden Abschlussteile mittels eines Zugankers miteinander verbunden. Die Verbindung mittels des Zugankers führt dazu, dass die hierdurch verbundenen Abschlussteile quer zum Zuganker und relativ zueinander, insbesondere in ihrer jeweiligen Erstreckungsebene, beweglich sind. Damit kann ebenfalls ein Ausgleich der durch die Kühlung erfolgten Deformationen des Kühlers erfolgen. Dieser Effekt kann dadurch verstärkt werden, dass die Verbindung des Kühlers mit dem Gehäuse über zumindest einem der anderen Abschlussteile realisiert ist. Eine weitere Verbesserung erfolgt dadurch, dass die benachbarten Abschlussteile kontaktlos zueinander angeordnet sind. Der Zuganker kann hierbei beliebig ausgestaltet sein und beispielsweise einen Zylinder und/oder eine Schraube und/oder einen Stab aufweisen. Dabei verläuft der jeweilige Zuganker bevorzugt nicht durch die Rohrstruktur. Bevorzugt sind ferner diejenigen Varianten, bei denen quer zur Einschubrichtung verlaufenden und sich gegenüberliegenden Abschlussteile mit einem solchen Zuganker miteinander verbunden sind.

Die Versorgung der Rohrstruktur mit Kühlmittel erfolgt bevorzugt mit Hilfe eines Kreislaufs, indem das Kühlmittel durch wenigstens einen Einlass in die Rohrstruktur eingebracht und durch zumindest einen Auslass aus der Rohrstruktur gelangt.

Gemäß einer vorteilhaften Ausführungsform weist einer der Abschlussteile ein Kühlmittelkasten auf oder ist als solcher ausgebildet. Hierbei handelt es sich vorzugsweise um den an in der Einschubrichtung von der Einschuböffnung entfernten Abschlussteil, um eine Montage des Kühlers ins Gehäuse zu vereinfachen. Der Kühlmittelkasten, dient insbesondere der Umleitung des Kühlmittels innerhalb der Rohrstruktur. Hierzu kann der Kühlmittelkasten wenigstens eine Umlenkkammer aufweisen, die das aus ersten Rohren ankommende Kühlmittel zu zweiten Rohren umlenkt.

Auch der gegenüberliegende Abschlussteil, das heißt insbesondere der im Bereich der Einschuböffnung angeordnete Abschlussteil, kann einen solchen Kühlmittelkasten aufweisen. Dieser Kühlmittelkasten kann eine Verteilerkammer aufweisen, die das Kühlmittel auf die ersten Rohre verteilt. Zudem kann eine Sammelkammer vorgesehen bzw. definiert sein, die das von den zweiten Rohren kommende Kühlmittel sammelt. Dementsprechend sind wenigstens ein solcher Einlass mit der Verteilerkammer, und wenigstens ein solcher Auslass mit der Sammelkammer verbunden.

Bei weiteren vorteilhaften Ausführungsformen ist der Kühler über einen solchen Abschlussteil schwenkbar im Gehäuse angeordnet. Eine entsprechende Schwenkachse verläuft dabei durch diesen Abschlussteil und insbesondere senkrecht dazu. Dies kann beispielsweise dadurch realisiert sein, dass der Abschlussteil beispielsweise durch eine solche Wand bzw. einen solchen Rand mit dem Gehäuse verbunden und die Wand bzw. der Rand bezüglich des Gehäuses beweglich und insbesondere schwenkbar ist.

Das Anbringen des jeweiligen Abschlussteils am Gehäuse kann auf beliebige Weise realisiert sein. Hierzu können das Gehäuse und der Abschlussteil miteinander verbördelt, insbesondere vercrimp, sein. Hierdurch ist insbesondere ein einfaches und/oder bewegliches Anbringen möglich.

Auch kann das Anbringen des Abschlussteils am Gehäuse mittels einer Verschraubung bzw. einer Schraube, insbesondere einer Bundschraube, realisiert werden, um ein einfaches und/oder bewegliches Anbringen zu ermöglichen. Weitere wichtige Merkmale und Vorteile der Erfindung ergeben sich aus den Unteransprüchen, aus den Zeichnungen und aus der zugehörigen Figurenbeschreibung anhand der Zeichnungen.

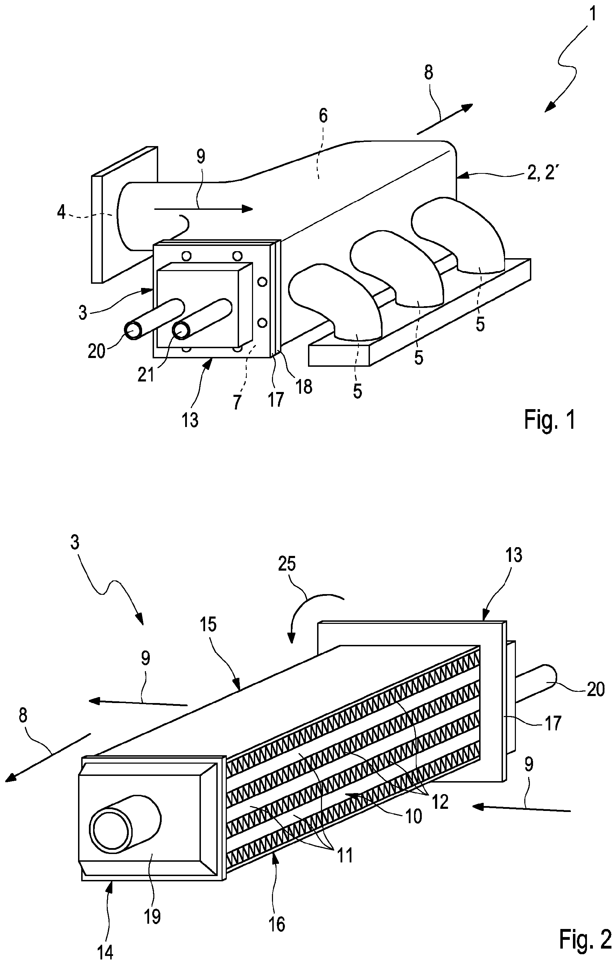

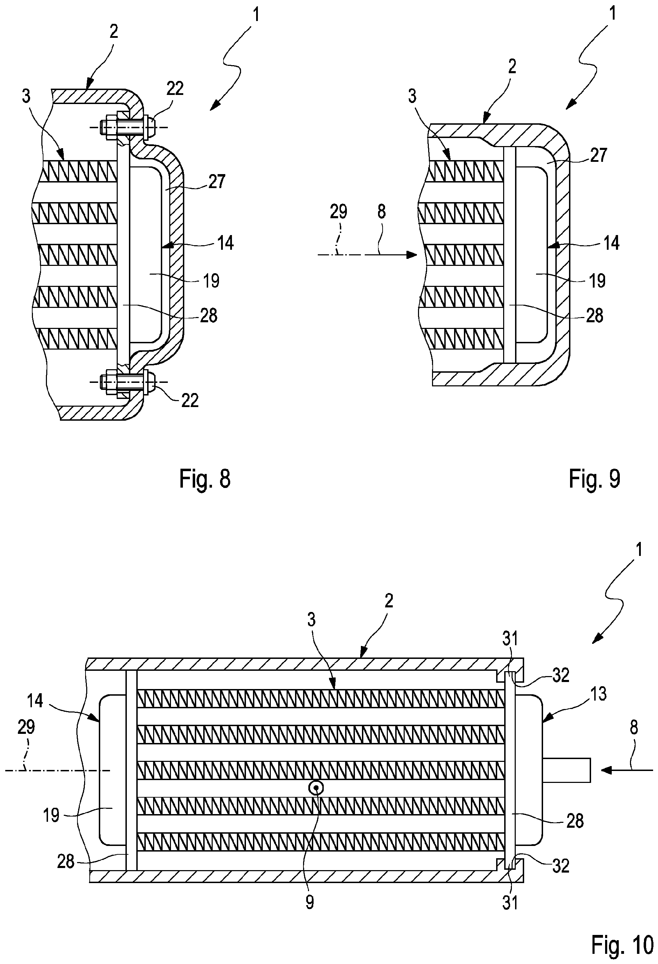

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen. In den nachfolgenden Fig. 1 bis 19 zeigen nur die Fig. 1 bis 7 und 16 bis 19 erfindungsgemäße Ausführungsformen, während die Fig. 8 bis 15 nicht erfindungsgemäße Ausführungsformen zeigen.

Es zeigen, jeweils schematisch
- Fig. 1: Eine räumliche Ansicht einer Ladeluftkühler-Anordnung,
- Fig. 2: eine räumliche Ansicht eines Kühlers der Anordnung,
- Fig. 3: eine teilweise geschnittene Seitenansicht der Anordnung,
- Fig. 4: eine Seitenansicht der Anordnung anderer Ausführungsform,
- Fig. 5: einen Längsschnitt durch den in Fig. 3 mit A bezeichneten Bereich,
- Fig. 6: einen Längsschnitt durch den in Fig. 3 mit A bezeichneten Bereich, bei einer anderen Ausführungsform,
- Fig. 7: einen Längsschnitt durch den in Fig. 3 mit A bezeichneten Bereich, bei einer weiteren Ausführungsform,
- Fig. 8: einen Längsschnitt durch einen Bereich der Anordnung bei einer nicht erfindungsgemäßen Variante,
- Fig. 9: die Ansicht aus Fig. 8 bei einer anderen nicht erfindungsgemäßen Ausführungsform,
- Fig. 10: einen Längsschnitt durch die Anordnung bei einer weiteren nicht erfindungsgemäßen Ausführungsform,
- Fig. 11: eine geschnittene räumliche Ansicht durch die nicht erfindungsgemäßen Anordnung,
- Fig. 12: die Ansicht aus Fig. 11 bei einer anderen nicht erfindungsgemäßen Ausführungsform,
- Fig. 13: einen Querschnitt durch einen Teil der nicht erfindungsgemäßen Anordnung,
- Fig. 14: die Ansicht aus Fig. 13 bei einer anderen nicht erfindungsgemäßen Ausführungsform,
- Fig. 15: die Ansicht aus Fig. 2 bei einer anderen nicht erfindungsgemäßen Ausführungsform,
- Fig. 16: eine Seitenansicht der Anordnung mit dem Kühler in seiner ursprünglichen Form,
- Fig. 17: die Ansicht aus Fig. 16 beim Betrieb der Anordnung,
- Fig. 18: die Ansicht aus Fig. 16 beim mit einem Gehäuse verbundenen Zustand des Kühlers,
- Fig. 19: die Ansicht aus Fig. 18 beim Betrieb der Anordnung.

Entsprechend Fig. 1 weist eine Ladeluftkühler-Anordnung 1 oder kurz Anordnung 1 ein Gehäuse 2 sowie einen Kühler 3 auf, der als Ladeluftkühler 3 bezeichnet werden kann. Das Gehäuse 2 ist als Verteilergehäuse 2' ausgestaltet, das einen Lufteingang 4 sowie mehrere fluidisch mit dem Lufteingang 4 verbundene Luftausgänge 5 aufweist. Zwischen dem Lufteingang 4 und den Luftausgängen 5 weist das Gehäuse 2 einen Aufnahmeraum 6 auf, in den der Kühler 3 durch eine Einschuböffnung 7 des Gehäuses 2 eingeschoben ist. Dabei wird der Kühler 3 durch die Einschuböffnung 7 in eine Einschubrichtung 8 in das Gehäuse 2 eingeschoben. Mit Hilfe des Kühlers 3 wird in einer Luftströmungsrichtung 9 durch den Lufteingang 4 in das Gehäuse 2 strömende Luft, insbesondre Ladeluft, gekühlt und gelangt anschließend durch die Luftausgänge 5 aus dem Gehäuse 2 bzw. der Anordnung 1 und wird beispielsweise einer hier nicht gezeigten Brennkraftmaschine zugeführt. Die Ladeluft kann hierbei von einem hier nicht gezeigten Verdichter eines ebenfalls nicht gezeigten Abgasturboladers stammen.

Fig. 2 zeigt eine räumliche Ansicht des Kühlers 3, der eine Rohrstruktur 10 mit einer Vielzahl von Rohren 11 aufweist, die sich in Einschubrichtung 8 erstrecken und zwischen denen eine Rippenstruktur 12 verläuft. Der Kühler 3 weist vier Abschlussteile 13, 14, 15, 16 auf, nämlich in Einschubrichtung 8 gegenüberliegende Abschlussteile 13, 14 die nachfolgend rein verständnishalber als erster Abschlussteil 13 und zweiter Abschlussteil 14 bezeichnet werden. Zudem weist der Kühler 3 an quer zur Einschubrichtung 8 und Luftströmungsrichtung 9 gegenüberliegenden Enden zwei weitere Abschlussteile 13, 14,15, 16 auf, die nachfolgend rein verständnishalber als dritter Abschlussteil 15 und vierter Abschlussteil 16 bezeichnet werden. Die Abschlussteile 15, 16 begrenzen die Rohrstruktur 10 an entsprechend seitlich gegenüberliegenden Seiten und sorgen hierzu für einen Zusammenhalt der Rohrstruktur 10. Aus den Figuren 1 und 2 ist ersichtlich, dass der erste Abschlussteil 13 einen Abschlussflansch 17 aufweist, der mit einem zugehörigen Gehäuseflansch 18 im Bereich der Einschuböffnung 7 zusammenwirkt, um den Kühler 3 am Gehäuse 2 anzubringen. Der dem ersten Abschlussteil 13 gegenüberliegende zweite Abschlussteil 14 weist auf seiner vom ersten Abschlussteil 13 abgewandten Seite einen Kühlmittelkasten 19 auf. Der dritte Abschlussteil 15 und der vierte Abschlussteil 16 sind im Wesentlichen eben ausgebildet.

Zur Kühlung der Ladeluft kommt ein Kühlmittel, beispielsweise Wasser, zum Einsatz, das durch die Rohrstruktur 10 strömt und somit die zwischen den Rohren 11 und der Rippenstruktur 12 in der Luftströmungsrichtung 9 strömende Ladeluft kühlt. Das Kühlmittel wird über einen am ersten Abschlussteil 13 außenliegenden Einlass 20 in die Rohrstruktur 10 eingebracht und strömt über einen ebenfalls außenseitig am ersten Abschlussteil 13 ausgebildeten Auslass 21 aus der Rohrstruktur 10 aus. Dabei wird das Kühlmittel im Kühlmittelkasten 19 zwischen den Rohren 11 umgelenkt. Durch die Kühlung der Ladeluft und die damit verbundenen Erwärmung des Kühlers entstehen innerhalb der Rohrstruktur 10 Temperaturunterschiede, die Ausdehnungen bzw. Kontraktionen des Kühlers 3 bzw. der Rohrstruktur 10 und damit verbundene Deformationen verursachen.

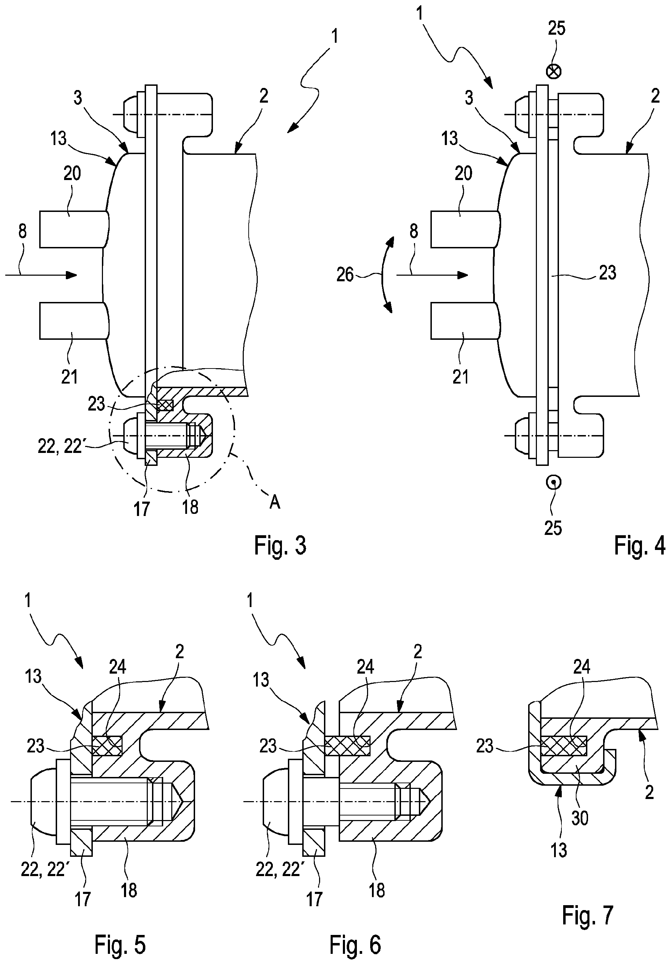

Erfindungsgemäß werden durch besagte Deformationen verursachte Schäden dadurch verhindert oder zumindest reduziert, dass der Kühler 3 mittels zumindest eines solchen Abschlussteils 13, 14, 15, 16 mit dem Gehäuse 2 verbunden ist, wobei wenigstens einer der Abschlussteile 13, 14, 15, 16 beweglich am Gehäuse 2 angebracht ist. Fig. 3 zeigt eine erste Ausführungsform zum Anbringen des ersten Abschlussteils 13 am Gehäuse 2. Dabei ist der mit "A" bezeichnete Bereich im Schnitt gezeigt und in Fig. 5 vergrößert dargestellt. Aus diesen Figuren wird ersichtlich, dass der Abschlussflansch 17 mit Hilfe von Schrauben 22 mit dem Gehäuseflansch 18 verbunden ist. Die Schrauben 22 sind dabei als Bundschrauben 22' ausgestaltet. Zusätzlich ist ein elastisches Element 23 vorgesehen, das in einer hin zum Abschlussflansch 17 offenen Nut 24 des Gehäuses 2 angeordnet ist. Hierdurch liegt der Anschlussflansch 17 am Gehäuseflansch 18 an, wobei das elastische Element 23 eine Bewegung des Abschlussteils 13 und somit des Kühlers 3 relativ zum Gehäuse 2 in der Einschubrichtung 8 erlaubt, um besagte Beschädigungen zu verhindern bzw. auszugleichen und/oder Toleranzen auszugleichen. Das elastische Element 23 dient ferner der Abdichtung des Aufnahmeraums 6.

Fig. 6 zeigt eine andere Ausführungsform, bei der das erste Abschlussteil 13 und somit der Abschlussflansch 17 beabstandet zur Gehäuse 2 und somit zum Gehäuseflansch 18 angeordnet ist. Hierzu ragt das elastische Element 23 aus der Nut 14 raus.

Die in Fig. 7 gezeigte Ausführungsform unterscheidet sind von der in Fig. 6 Gezeigten dadurch, dass der erste Abschlussteil 13 mit dem Gehäuse 2 verbördelt und von einer entsprechenden Wandung 30 des Gehäuses 2 beabstandet ist. Die Verbördelung erlaubt hierbei zusätzliche Bewegungsfreiheiten des Kühlers 3 im Gehäuse 2.

Bei den in Figuren 3, 5, 6 und 7 gezeigten Ausführungsformen erstreckt sich das elastische Element 23 in einer Umfangsrichtung 25 des ersten Abschlussteils 13, wie dies auch in Fig. 4 gezeigt ist. Hierdurch kann eine gleichmäßige Bewegungsfreiheit des Kühlers 3 erreicht werden. Zudem ist es möglich, dass der Kühler 3 sich in unterschiedlichen Bereichen unterschiedlich stark relativ zum Gehäuse 2 bewegt. Hierdurch ist auch ein mit einem Doppelpfeil 26 angedeutetes Kippen des Kühlers 3 bezüglich des Gehäuses 2 möglich, um besagten Beschädigungen entgegenzuwirken bzw. Toleranzausgleiche zu schaffen.

Die Figuren 8 und 9 zeigen nicht erfindungsgemäßen Ausführungsformen zum Anbringen des Kühlers 3 am Gehäuse 2 über den zweiten Abschlussteil 14, der den Kühlmittelkasten 19 aufweist. In diesen Figuren ist einerseits erkennbar, dass das Gehäuse 2 eine Aufnahme 27 aufweist, in der der Kühlmittelkasten 19 angeordnet ist. Die Aufnahme 27 ist dabei größer als der Kühlmittelkasten 19. Andererseits weist der zweite Anschlussteil 14 eine ebene Wand 28 auf, die zwischen dem Wasserkasten 19 und der Rohrstruktur 10 angeordnet ist. Das Anbringen des zweiten Abschlussteils 14 am Gehäuse 2 erfolgt dabei mittels dieser Wand 28. In Fig. 8 ist die Wand außerhalb der Aufnahme 27 angeordnet und unter Einsatz von Schrauben 22 mit dem Gehäuse 2 verbunden. In Fig. 9 ist die Wand 28 in der Aufnahme 27 angeordnet und kontaktiert dort das Gehäuse 2. Somit ist bei der in Fig. 9 gezeigten Ausführungsform der zweite Abschlussteil 14 und somit der Kühler 3 relativ zum Gehäuse 2 in Einschubrichtung 8 beweglich. Auch kann der zweite Abschlussteil 14 um eine durch den zweiten Abschlussteil 14 und parallel zur Einschubrichtung 8 verlaufende Schwenkachse 29 geschwenkt werden und ist auch somit relativ zum Gehäuse 2 beweglich.

Fig. 10 zeigt eine weitere nicht erfindungsgemäße Ausführungsform der Anordnung. Hierbei weist der Kühler 3 lediglich zwei solche Abschlussteile 13, 14nämlich den ersten Abschlussteil 13 und den zweiten Abschlussteil 14, auf. Beide Abschlussteile 13, 14 weisen eine solche Wand 28 auf, wobei der erste Abschlussteil 13 zwei gegenüberliegende und von der zugehörigen Wand 28 in Erstreckungsrichtung des ersten Abschlussteils 13 abstehende Ränder 31 aufweist. Der jeweilige Rand 31 steht dabei senkrecht zur Einschubrichtung 8 vom ersten Abschlussteil 13 ab und ist in einem zugehörigen Schlitz 32 des Gehäuses 2 angeordnet und somit am Gehäuse 2 angebracht. Damit kommt es zu einer formschlüssigen Verbindung zwischen dem ersten Abschlussteil 13 und dem Gehäuse 2. Ebenso, kann es sich hierbei bei einem in Umfangrichtung 25 verlaufenden Rand 31 handeln, die in Umfangrichtung 25 geschlossen verlaufen kann. Hierdurch ist der Kühler 3 relativ zum Gehäuse 2 um eine parallel zur Einschubrichtung 8 verlaufende Schwenkachse 29, die durch den ersten Abschlussteil 13 und den zweiten Abschlussteil 14 verläuft, bzw. in Umfangrichtung 25 schwenkbar bzw. kippbar. Zudem ist der ersten Abschlussteil 13 in Luftströmungsrichtung 9 relativ zum Gehäuse 2 beweglich.

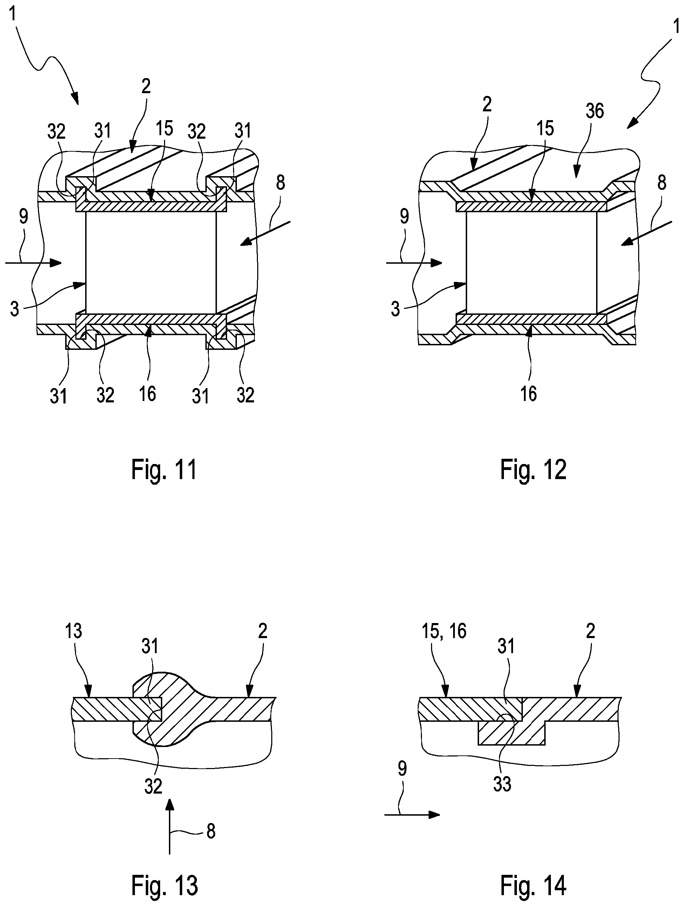

Die in Fig. 11 gezeigte nicht erfindungsgemäße Ausführungsform weist im Vergleich zur Fig. 10 lediglich den dritten Abschlussteil 15 und den vierten Abschlussteil 16 auf. Diese Abschlussteile 15, 16 weisen jeweils zwei Ränder 31 auf, die senkrecht zur Erstreckungsrichtung der Abschlussteile 15, 16 vom zugehörigen Abschlussteil 15, 16 abstehen. Die Ränder 31 sind jeweils in einem zugehörigen Schlitz 32 angeordnet und der Kühler 3 somit am Gehäuse 2 angebracht. Somit kommt es zu einer formschlüssigen Verbindung zwischen den Rändern 31 und dem Gehäuse 2, wobei die Ränder 31 entlang der zugehörigen Schlitze 32 bewegbar bzw. verschiebbar sind. Die Schlitze 32 sowie die Ränder 31 verlaufen dabei parallel und in Einschubrichtung 8, sodass der dritte Abschlussteil 15 und der vierte Abschlussteil 16 in Einschubrichtung 8 relativ zum Gehäuse 2 beweglich sind.

Bei der in Fig. 11 gezeigten Ausführungsform kann die Montage des Kühlers 3 ins Gehäuse 2 durch das Einschieben des Kühlers in das Gehäuse erfolgen. Im Gegensatz hierzu bedarf die Montag der in Fig. 10 gezeigten Ausführungsform, die im Bereich einer der Ränder 31 in Fig. 13 vergrößert dargestellt ist, einer Umspritzung des Rands 31.

Fig. 12 zeigt eine weitere nicht erfindungsgemäße Ausführungsform, bei der der dritte Abschlussteil 15 und/oder der vierte Abschlussteile 16 mit dem Gehäuse 2 verklebt und/oder verlötet und/oder verschweißt sein können. Somit kann im Vergleich zu Fig. 11 auf eine formschlüssige Verbindung verzichtet werden. Dabei weist das Gehäuse 2 im Bereich des Kühlers 3 eine Verengung 36 auf, um den Kühler 3 aufzunehmen.

Fig. 14 zeigt eine weitere nicht erfindungsgemäße Ausführungsform, die beispielsweise bei der in Fig. 11 gezeigten Variante zum Einsatz kommen kann. Hierbei stehen die Ränder 31 in Erstreckungsrichtung des dritten Abschlussteils 15 oder vierten Abschlussteils 16 vom zugehörigen Abschlussteil 15, 16 ab und sind auf einer Ablage 33 des Gehäuses 2 angeordnet. Hierbei kann der jeweilige Rand 31 mit der zugehörigen Ablage 33 geklebt sein.

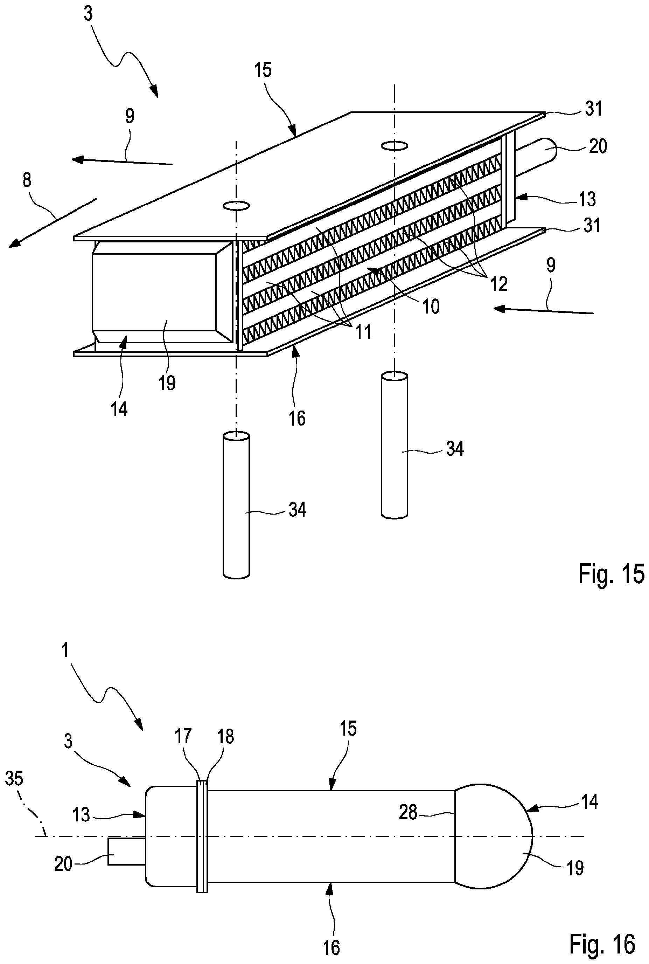

In Fig. 15 ist eine nicht erfindungsgemäße Ausführungsform des Kühlers 3 gezeigt, die 4 solche Abschlussteile 13, 14, 15, 16 aufweist. Der dritte Abschlussteil 15 und der vierte Abschlussteil 16 weisen jeweils in Luftströmungsrichtung 9 abstehende Ränder 31 auf. Der dritte Abschlussteil 15 und der vierte Abschlussteil 16 sind zudem mittels zweier parallel verlaufender Zuganker 34 miteinander verbunden, die in Fig. 15 in nicht montiertem Zustand gezeigt sind. Die Zuganker 34 erlauben dabei eine relative Bewegung des dritten Abschlussteils 15 und des vierten Abschlussteils 16 zueinander quer zur Richtung der Zuganker 34 und somit eine Möglichkeit, besagte Beschädigungen zu vermeiden oder zumindest zu reduzieren.

Fig. 16 zeigt eine Ansicht des Kühlers 3 in seiner ursprünglichen Form, d.h. seiner Form vor der Montage in das Gehäuse 2 bzw. außerhalb des Betriebs der Anordnung 1. Diese ursprüngliche Form bzw. Zustand des Kühlers 3 gibt die gewünschte Form des Kühlers 3 während dem Betrieb vor, weil bei dieser Form Beschädigungen des Kühlers 3 vermieden oder reduziert werden. Der Kühler 3 ist mittels des Anschlussflanschs 17 am ersten Abschlussteil 13 fest mit dem Gehäuseflansch 18 verbunden und hier somit im Wesentlichen am Gehäuse fixiert. Im Ursprungszustand verlaufen der dritte Abschlussteil 15 und der vierte Abschlussteil 16 eben und parallel zueinander. Eine Längsmittelachse 35 des Kühlers 3 in seiner ursprünglichen Form verläuft demensprechend mittig durch den Kühler 3.

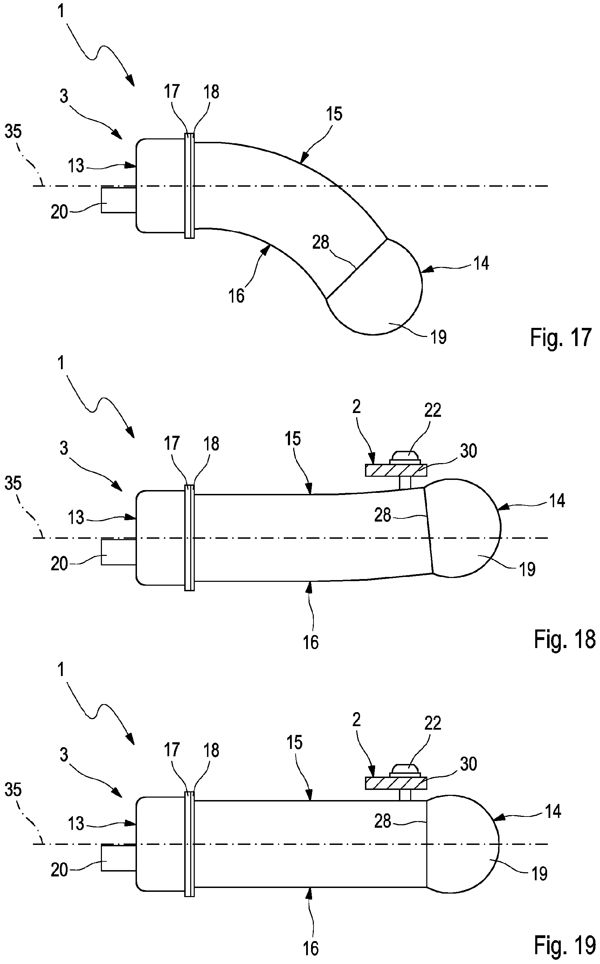

Fig. 17 zeigt die Form des Kühlers aus Fig. 16 beim Betrieb der Anordnung 1. Durch die Temperaturunterschiede innerhalb des Kühlers verbiegt sich der Kühler 3, insbesondere die Rohrstruktur 10, in die in der Ansicht der Fig. 16 beispielshaft dargestellte untere Richtung. In diesem deformierten bzw. verbogenem Zustand verläuft der Kühler 3 nicht mittig bezüglich der Längsmittelachse 35 seiner ursprünglichen Form. Der dritte Abschlussteil 15 und der vierte Abschlussteil 16 sind verbogen. Insbesondere können in diesem Zustand Beschädigungen des Kühlers 3 bzw. der Anordnung 1 auftreten.

Um der Verbiegung des Kühlers 3 in Fig. 17 entgegenzuwirken, wird der Kühler 3 gemäß Fig. 18 vorgespannt. Die Vorspannung erfolgt mittels einer in das Gehäuse 2 eingeschraubten Schraube 22, die den dritten Abschlussteil 15 und somit den Kühler 3 in Richtung des Gehäuses 2 bzw. deren Wandung 30 vorspannt. Die Vorspannung erfolgt also in die der beim Betrieb der Anordnung 1 erwarteten und in Fig. 17 dargestellten Deformation bzw. Verbiegung entgegengesetzte Richtung. Der dritte Abschlussteil 15 und somit der Kühler 3 wird also negativ vorgespannt. Der Kühler 3 verläuft nicht mittig bezüglicher der Längsmittelachse 35 seiner ursprünglichen Form.

Hierbei ist der dritte Abschlussteil 15 beweglich am Gehäuse 2 abgebracht bzw. vorgespannt. Beim Betrieb der Anordnung 1 verbiegt sich der Kühler 3 in die in Fig. 17 gezeigte Richtung. Die Vorspannung ist dabei derart gewählt, dass die Vorspannung und die Verbiegung sich derart gegenüberstehen, dass der Kühler 3, wie in Fig. 19 dargestellt, beim Betrieb seine ursprüngliche Form annimmt. In dieser Form verläuft der Kühler 3 also, wie erwünscht, im Wesentlichen mittig bezüglich der Längsmittelachse 35 seiner ursprünglichen Form. Somit werden Beschädigungen der Anordnung 1, insbesondere des Kühlers 3, vermieden oder zumindest reduziert.

## Patentansprüche

1. Ladeluftkühler-Anordnung (1) mit einem durchströmbaren Gehäuse (2) zur Versorgung einer Brennkraftmaschine mit Ladeluft sowie mit einem im Gehäuse (2) angeordneten, von der Ladeluft durchströmbaren Kühler (3) zum Kühlen der Ladeluft, wobei
- der Kühler (3) eine Rohrstruktur (10) aufweist, die zum Kühlen der Ladeluft von einem Kühlmittel durchströmbar ist,
- das Gehäuse (2) eine Einschuböffnung (7) aufweist, durch welche der Kühler (3) in einer quer zur Strömungsrichtung (9) der Ladeluft verlaufenden Einschubrichtung (8) in das Gehäuse (2) einschiebbar ist,
- der Kühler (3) einen ersten Abschlussteil (13) und einen vom ersten Abschlussteil (13) beabstandeten zweiten Abschlussteil (14) aufweist, wobei der erste Abschlussteil (13) und der zweite Abschlussteil (14) einander gegenüberliegend und quer zur Einschubrichtung angeordnet sind,
- der Kühler (3) einen dritten Abschlussteil (15) und einen dem dritten Abschiussteii (15) gegenüberliegenden vierten Abschlussteil (16) aufweist, die quer zum ersten Abschlussteil (13) und zum zweiten Abschlussteil (14) verlaufen und parallel zur Strömungsrichtung (9) angeordnet sind,
- die Abschlussteile (13, 14, 15, 16) die Rohrstruktur (10) seitlich begrenzen und mit der Rohrstruktur (10) mechanisch verbunden sind,
- der Kühler (3) über den ersten Abschlussteil (13) mit dem Gehäuse (2) mechanisch verbunden ist,
- alle anderen Abschlussteile (14, 15, 16) bezüglich des Gehäuses (2) beweglich am Gehäuse (2) angebracht ist,
**dadurch gekennzeichnet,**
- **dass** der Kühler (3) über wenigstens einen der Abschlussteile (15, 16) gegen das Gehäuse (2) vorgespannt ist,
- **dass** die Vorspannung in bei der Kühlung der Ladeluft zu erwartenden Verbiegung des Kühlers (3) entgegengesetzter Richtung orientiert ist.

2. Anordnung nach Anspruch 1,
**dadurch gekennzeichnet,**
**dass** wenigstens ein solcher Abschlussteil (13, 14, 15, 16) vom Gehäuse (29), insbesondere von einer Wandung (30) des Gehäuses (2), beabstandet ist.

3. Anordnung nach Anspruch 1 oder 2,
**dadurch gekennzeichnet,**
**dass** wenigstens ein solcher Abschlussteil (13, 14, 15, 16) eine ebene Wand (28) aufweist.

4. Anordnung nach einem der Ansprüche 1 bis 3,
**dadurch gekennzeichnet,**
**dass** ein elastisches Element (23) zwischen dem Abschlussteil (13, 14, 15, 16) und dem Gehäuse (2) angeordnet ist.

5. Anordnung nach Anspruch 4,
**dadurch gekennzeichnet,**
**dass** sich das elastische Element (23) in einer Umfangsrichtung (25) entlang des zugehörigen Abschlussteils (13, 14, 15, 16) erstreckt.

6. Anordnung nach einem der Ansprüche 1 bis 5,
**dadurch gekennzeichnet,**
- **dass** der erste Abschlussteil (13) einen Abschlussflansch (17) aufweist,
- **dass** das Gehäuse (2) einen zum Abschlussflansch (17) komplementären Gehäuseflansch (18) aufweist,
- **dass** der Abschlussflansch (17) und der Gehäuseflansch (18) zum mechanischen Verbinden des Kühlers (3) mit dem Gehäuse (2) miteinander verbunden sind.

7. Anordnung nach einem der Ansprüche 1 bis 6,
**dadurch gekennzeichnet,**
**dass** wenigstens einer der Abschlussteile (13, 14, 15, 16) einen abstehenden Rand (31) aufweist, der den Abschlussteil (13, 14, 15, 16) mit dem Gehäuse (2) verbindet.

8. Anordnung nach Anspruch 7,
**dadurch gekennzeichnet,**
**dass** der Rand (31) in einem zugehörigen Schlitz (32) des Gehäuses (2) oder auf einer zugehörigen Ablage (33) des Gehäuses (2) angeordnet ist.

9. Anordnung nach einem der Ansprüche 1 bis 8,
**dadurch gekennzeichnet,**
**dass** zwei der gegenüberliegenden Abschlussteile (13, 14, 15, 16) mittels eines Zugankers (34) miteinander verbunden sind.

10. Anordnung nach einem der Ansprüche 1 bis 9,
**dadurch gekennzeichnet,**
**dass** der Kühler (3) über einen solchen Abschlussteil (13, 14, 15, 16) um eine durch diesen Abschlussteil (13, 14, 15, 16) verlaufende Schwenkachse (29) schwenkbar im Gehäuse (2) angeordnet ist.

11. Anordnung nach einem der Ansprüche 1 bis 10,
**dadurch gekennzeichnet,**
**dass** an einem der Abschlussteile (13, 14, 15, 16) ein Einlass (20) zum Einlassen des Kühlmittels in die Rohrstruktur (10) und/oder ein Auslass (21) zum Auslassen des Kühlmittels aus der Rohrstruktur (10) ausgebildet ist.

12. Anordnung nach einem der Ansprüche 1 bis 11,
**dadurch gekennzeichnet,**
**dass** wenigstens ein solcher Abschlussteil (13, 14, 15, 16) und das Gehäuse (2) miteinander verbördelt, insbesondere vercrimpt, sind.

## Claims

1. An intercooler assembly (1) comprising a housing (2) through which flow can pass for supplying an internal combustion engine with charge air, and a cooler (3), arranged in the housing (2), able to be flowed through by the charge air, for cooling the charge air, wherein
- the cooler (3) has a pipe structure (10), which is able to be flowed through by a coolant for cooling the charge air,
- the housing (2) has an insertion opening (7), through which the cooler (3) is able to be inserted into the housing (2) in an insertion direction (8) running transversely to the flow direction (9) of the charge air,
- the cooler (3) has a first end part (13) and a second end part (14) spaced apart from the first end part (13), wherein the first end part (13) and the second end part (14) are arranged lying opposite one another and transversely to the insertion direction,
- the cooler (3) has a third end part (15) and a fourth end part (16) lying opposite the third end part (15), which run transversely to the first end part (13) and to the second end part (14) and are arranged parallel to the flow direction (9),
- the end parts (13, 14, 15, 16) laterally delimit the pipe structure (10) and are mechanically connected to the pipe structure (10),
- the cooler (3) is mechanically connected to the housing (2) by means of the first end part (13),
- all of the other end parts (14, 15, 16) are attached to the housing (2) movably with respect to the housing (2),
**characterized in**
- **that** the cooler (3) is pre-stressed against the housing (2) by means of at least one of the end parts (15, 16),
- **that** the pre-stressing is oriented in the opposite direction to the deflection of the cooler (3) which is to be expected on the cooling of the charge air.

2. The assembly according to claim 1,
**characterized in**
**that** at least one such end part (13, 14, 15, 16) is spaced apart from the housing (29), in particular from a wall (30) of the housing (2).

3. The assembly according to claim 1 or 2,
**characterized in**
**that** at least one such end part (13, 14, 15, 16) has a planar wall (28).

4. The assembly according to one of claims 1 to 3,
**characterized in**
**that** an elastic element (23) is arranged between the end part (13, 14, 15, 16) and the housing (2).

5. The assembly according to claim 4,
**characterized in**
**that** the elastic element (23) extends in a circumferential direction (25) along the associated end part (13, 14, 15, 16).

6. The assembly according to one of claims 1 to 5, **characterized in**
- **that** the first end part (13) has an end flange (17),
- **that** the housing (2) has a housing flange (18) complementary to the end flange (17),
- **that** the end flange (17) and the housing flange (18) are connected to one another for mechanically connecting the cooler (3) to the housing (2).

7. The assembly according to one of claims 1 to 6,
**characterized in**
**that** at least one of the end parts (13, 14, 15, 16) has a protruding edge (31), which connects the end part (13, 14, 15, 16) to the housing (2).

8. The assembly according to claim 7,
**characterized in**
**that** the edge (31) is arranged in an associated slot (32) of the housing (2) or on an associated placement area (33) of the housing (2).

9. The assembly according to one of claims 1 to 8,
**characterized in**
**that** two of the opposite end parts (13, 14, 15, 16) are connected to one another by means of a tension anchor (34).

10. The assembly according to one of claims 1 to 9,
**characterized in**
**that** the cooler (3) is arranged in the housing (2) by means of such an end part (13, 14, 15, 16) pivotably about a pivot axis (29) running through this end part (13, 14, 15, 16).

11. The assembly according to one of claims 1 to 10,
**characterized in**
**that** on one of the end parts (13, 14, 15, 16) an inlet (20) is formed for letting in the coolant into the pipe structure (10), and/or an outlet (21) is formed for letting out the coolant from the pipe structure (10) .

12. The assembly according to one of claims 1 to 11,
**characterized in**
**that** at least one such end part (13, 14, 15, 16) and the housing (2) are flanged, in particular crimped, to one another.

## Revendications

1. Agencement de refroidisseur d'air de suralimentation (1) comportant un boîtier (2) pouvant être traversé par un écoulement pour alimenter un moteur à combustion interne avec de l'air de suralimentation, et un refroidisseur (3) qui est agencé dans le boîtier (2) et pouvant être traversé par un écoulement d'air de suralimentation pour refroidir l'air de suralimentation, dans lequel
- le refroidisseur (3) présente une structure tubulaire (10) pouvant être traversée par un écoulement de fluide de refroidissement afin de refroidir l'air de suralimentation,
- le boîtier (2) présente une ouverture d'insertion (7) à travers laquelle le refroidisseur (3) peut être inséré dans le boîtier (2) dans une direction d'insertion (8) s'étendant transversalement à une direction d'écoulement (9) de l'air de suralimentation,
- le refroidisseur (3) présente une première partie d'extrémité (13) et une deuxième partie d'extrémité (14) espacée de la première partie d'extrémité (13), dans lequel la première partie d'extrémité (13) et la deuxième partie d'extrémité (14) sont à l'opposé l'une de l'autre et transversalement par rapport à la direction d'insertion,
- le refroidisseur (3) présente une troisième partie d'extrémité (15) et une quatrième partie d'extrémité (16) qui est à l'opposé de la troisième partie d'extrémité (15) et qui s'étend transversalement à la première partie d'extrémité (13) et à la deuxième partie d'extrémité (14) et qui est agencée parallèlement à la direction d'écoulement (9),
- les parties d'extrémité (13, 14, 15, 16) délimitent latéralement la structure tubulaire (10) et sont reliées mécaniquement à la structure tubulaire (10),
- le refroidisseur (3) est relié mécaniquement au boîtier (2) par l'intermédiaire de la première partie d'extrémité (13),
- toutes les autres parties d'extrémité (14, 15, 16) sont montées sur le boîtier (2) de manière à être mobiles par rapport au boîtier (2),
**caractérisé en ce que**
- le refroidisseur (3) est précontraint contre le boîtier (2) par l'intermédiaire d'au moins une des parties d'extrémité (15, 16),
- la précontrainte est orientée dans le sens opposé à la flexion du refroidisseur (3) à prévoir lors du refroidissement de l'air de suralimentation.

2. Agencement selon la revendication 1,
**caractérisé en ce que**
au moins une telle partie d'extrémité (13, 14, 15, 16) est espacée du boîtier (29), en particulier d'une paroi (30) du boîtier (2).

3. Agencement selon la revendication 1 ou 2,
**caractérisé en ce que**
au moins une telle partie d'extrémité (13, 14, 15, 16) présente une paroi plane (28).

4. Agencement selon l'une quelconque des revendications 1 à 3,
**caractérisé en ce que**
un élément élastique (23) est agencé entre la partie d'extrémité (13, 14, 15, 16) et le boîtier (2).

5. Agencement selon la revendication 4,
**caractérisé en ce que**
l'élément élastique (23) s'étend dans une direction périphérique (25) le long de la partie d'extrémité associée (13, 14, 15, 16).

6. Agencement selon l'une quelconque des revendications 1 à 5,
**caractérisé en ce que**
- la première partie d'extrémité (13) présente une bride d'extrémité (17),
- le boîtier (2) présente une bride de boîtier (18) complémentaire de la bride d'extrémité (17),
- la bride d'extrémité (17) et la bride de boîtier (18) sont reliées l'une à l'autre pour relier mécaniquement le refroidisseur (3) au boîtier (2).

7. Agencement selon l'une quelconque des revendications 1 à 6,
**caractérisé en ce que**
au moins une des parties d'extrémité (13, 14, 15, 16) présente un bord saillant (31) qui relie la partie d'extrémité (13, 14, 15, 16) au boîtier (2).

8. Agencement selon la revendication 7,
**caractérisé en ce que**
le bord (31) est agencé dans une fente (32) associée du boîtier (2) ou sur un plateau (33) associé du boîtier (2).

9. Agencement selon l'une quelconque des revendications 1 à 8,
**caractérisé en ce que**
deux des parties d'extrémité opposées (13, 14, 15, 16) sont reliées l'une à l'autre au moyen d'une tige de traction (34).

10. Agencement selon l'une quelconque des revendications 1 à 9,
**caractérisé en ce que**
le refroidisseur (3) est agencé dans le boîtier (2) de manière à pouvoir pivoter autour d'un axe de pivotement (29) s'étendant à travers cette partie d'extrémité (13, 14, 15, 16) par l'intermédiaire d'une telle partie d'extrémité (13, 14, 15, 16).

11. Agencement selon l'une quelconque des revendications 1 à 10,
**caractérisé en ce que**
une entrée (20) pour admettre le fluide de refroidissement dans la structure tubulaire (10) et/ou une sortie (21) pour évacuer le fluide de refroidissement à partir de la structure tubulaire (10) est formée au niveau de l'une des parties d'extrémité (13, 14, 15, 16).

12. Agencement selon l'une quelconque des revendications 1 à 11,
**caractérisé en ce que**
au moins une telle partie d'extrémité (13, 14, 15, 16) et le boîtier (2) sont bordés ensemble, en particulier sertis ensemble.
